Europäisches Patentamt

European Patent Office

Office européen des brevets

(11) Veröffentlichungsnummer: **0 291 875**

**A2**

(12) **EUROPÄISCHE PATENTANMELDUNG**

(21) Anmeldenummer: 88107712.7

(22) Anmeldetag: 13.05.88

(51) Int. Cl.4: **H01M 4/78 , H01M 10/39**

(30) Priorität: 19.05.87 DE 3716735

(43) Veröffentlichungstag der Anmeldung:
23.11.88 Patentblatt 88/47

(84) Benannte Vertragsstaaten:
BE DE ES FR GB IT SE

(71) Anmelder: **Asea Brown Boveri Aktiengesellschaft**
**Kallstadter Strasse 1**
**D-6800 Mannheim-Käfertal(DE)**

(72) Erfinder: **Steinleitner, Günther, Dr.**
**Hans-Pfitzner-Strasse 1**
**F-6905 Schriesheim(DE)**
Erfinder: **Mennicke, Stefan, Dr.**
**Türkisweg 27**
**D-6906 Leimen-Gauangelloch(DE)**
Erfinder: **Feindler, Philibert**
**Weinbergstrasse 19**
**D-6837 St. Leon-Rot 1(DE)**
Erfinder: **Klein, Herbert**
**Albrecht-Dürer-Ring 16**
**D-6701 Frankenthal(DE)**
Erfinder: **Maldonado-Zagal, Sigisfredo, Dr.**
**Im Vogelskorb 13**
**D-6803 Edingen-Neckarhausen 1(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**D-6800 Mannheim 1(DE)**

(54) **Elektrochemische Speicherzelle.**

(57) Die Erfindung bezieht sich auf eine elektrochemische Speicherzelle (1) in deren Kathodenraum ein Filz (7) angeordnet ist, dessen Fasern (11) aus Graphit oder Kohle auf der Basis von Pech hergestellt wird. Diese Filze (7) weisen jedoch nur eine sehr geringe Rückstellkraft auf. Des weiteren ist ihr elektrischer Widerstand relativ hoch gegenüber Filzen aus Naturgraphit. Zur Ausbildung der im Kathodenraum (4) angeordneten Elektrode (6) wird deshalb ein Filz (7) in Form einer Matte (10) verwendet, der in gefalteter Form in den Kathodenraum (4) eingesetzt wird. Die Falten (12) sind so angeordnet, daß ihre Längsachsen senkrecht zu den Längsachsen der die Matte (10) bildenden Fasern (11) verlaufen. Der Filz (7) selbst wird so im Kathodenraum (4) angeordnet, daß die Längsachsen der Falten (12) parallel zur Längsachse der Speicherzelle angeordnet sind. Eine radiale Ausrichtung der Fasern (11) wird auch dann erreicht, wenn die Falten (12) die Längsachse der Speicherzelle (1) ringförmig umgeben.

## Elektrochemische Speicherzelle

Die Erfindung bezieht sich auf eine elektrochemische Speicherzelle gemäß dem Oberbegriff des Patentanspruchs 1.

Solche elektrochemischen Speicherzellen eignen sich sehr gut zum Aufbau von Hochtemperatur-Speicherbatterien, die als Energiequellen von Elektrofahrzeugen vorgesehen sind.

Ein Beispiel hierfür sind die wiederaufladbaren Speicherzellen auf der Basis von Natrium and Schwefel, die einen Festelelktrolyten aus Betaaluminiumoxid besitzen, der den Anodenraum vom Kathodenraum trennt. Ein Vorteil dieser elektrochemischen Speicherzellen besteht darin, daß beim Laden keine elektrochemischen Nebenreaktionen auftreten. Der Grund dafür ist, daß nur Natriumionen durch den Festelektrolyten gelangen können. Die Stromausbeute einer solchen Natrium/Schwefel-Speicherzelle liegt daher bei 100 %.

Aus der DE-OS 34 25 859 ist eine elektrochemische Speicherzelle bekannt, bei der zur Bildung der Schwefelelektrode im Kathodenraum ein Filz angeordnet ist, der mit Schwefel getränkt ist. Der Filz wird durch Fasern aus Kohle oder Graphit auf der Basis von Pech gebildet. Um einen Filz zu erhalten, der einen niedrigen elektrischen Widerstand aufweist, müssen erhebliche Aufwendungen vorgenommen werden. Zunächst muß aus den Faststrängen ein Verbundkörper aufgeschichtet werden, der durch einen inerten oder verkokbaren Werkstoff gefestigt wird. Dabei werden die Fasern so angeordnet, daß sie im wesentlichen alle parallel zueinander verlaufen. Anschließend werden von dem so gebildeten Verbundkörper Scheiben abgeschnitten, derart, daß die Schnittflächen senkrecht zu den Längsachsen der Fasern verlaufen. Die so abgetrennten Scheiben werden in den Kathodenraum der Speicherzellen eingesetzt. Durch die spezielle Ausbildung des Verbundkörpers und der hieraus gebildeten Scheiben wird erreicht, daß die Fasern nach dem Einsetzen des Filzes senkrecht zur Längsachse der Speicherzelle verlaufen, wodurch ein niedriger elektrischer Widerstand des Filzes erreicht wird. Ein wesentlicher Nachteil dieses Filzes ist in seiner aufwendiger Herstellung zu sehen. Trotz dieser aufwendigen Herstellung weist der Filz nicht die erforderlichen Rückstellkräfte aufweist, die bei Verwendung von etwas anders aufgebauten Filzen aus Cellulose oder Polyacrylnitrid erzielt werden.

Der Erfindung liegt die Aufgabe zugrunde, eine elektrochemische Speicherzelle der eingangs genannen Art so zu verbessern, daß der die Schwefelelektrode mitbildende Filz den geforderten elektrischen Widerstand aufweist und über die notwendigen Rückstellkrafte verfügt.

Diese Aufgabe wird erfindungsgemäß durch die Merkmale des Patentanspruches 1 gelöst. Erfindungsgemäß werden Matten aus Graphit- oder Kohlefasern, welche aus Pech hergestellt sind, zur Bildung der Schwefelelektrode verwendet. Bei der Herstellung der Matten werden die Fasern so angeordnet, daß sie im wesentlichen parallel zueinander verlaufen. Vor dem Einsetzen der Matte in den Kathodenraum wird diese in Falten gelegt. Die Falten werden so angeordnet, daß ihre Längsachsen senkrecht zu den Längsachsen der Fasern verlaufen. Die Breite und Höhe dieser Falten wird so gewählt, daß das Verhältnis 0,2:1 bis 2:1, vorzugsweise 0,5:1 bis 1:1 beträgt. Die so gefaltete Matte, wird in den Kathodenraum derart eingesetzt, daß die Fasern aufgrund der ausgebildeten Falten senkrecht zur Längsachse der Speicherzelle verlaufen. Durch die oben beschriebene Anordnung der Falten, ergeben sich zwei Möglichkeiten, die gefaltete Matte in den Kathodenraum einzusetzen, und gleichzeitig die gewünschte Anordnung der Fasern zu erhalten. Es besteht einmal die Möglichkeit, den Filz so in den Kathodenraum einzusetzen, daß die Längsachsen der Falten zur Längsachse der Speicherzellen parallel verlaufen. Bei der zweiten möglichen Anordnung werden die Längsachsen der Falten ringförmig um die Längsachse der Speicherzelle angeordnet. Anstelle einer einzigen Matte können auch mehrere Teilstücke in den Kathodenraum eingesetzt werden. Um hierbei einen möglichst niedrigen ohmschen Widerstand des Filzes zu erhalten und sehr hohe Rückstellkräfte zu erreichen, sollte das Verhältnis der Länge dieser Stücke zur Breite ihrer Falten zwischen 5:1 und 20:1 betragen. Bevorzugt ist ein Verhältnis zwischen der Länge dieser Stücke und ihrer Faltenbreite von 10:1. Die Menge des in den Kathodenraum einzubringenden Filzes sollte in allen Fällen zwischen 5 und 30 mg/cm³ vorzugsweise 10 bis 20 mg/cm³ betragen.

Weitere erfindungswesentliche Merkmale sind in den Unteransprüchen gekennzeichnet. Die Erfindung wird anhand von Zeichnungen näher erläutert.

Es zeigen:

Fig.1 Eine elektrochemische Speicherzelle mit einem gefalteten Filz im Kathodenraum,

Fig.2 einen noch nicht gefalteten Filz,

Fig.3 den zur Ausbildung der Schwefelelektrode gefalteten Filz,

Fig.4 eine weitere Anordnungsmöglichkeit des Filzes innerhalb des Kathodenraums

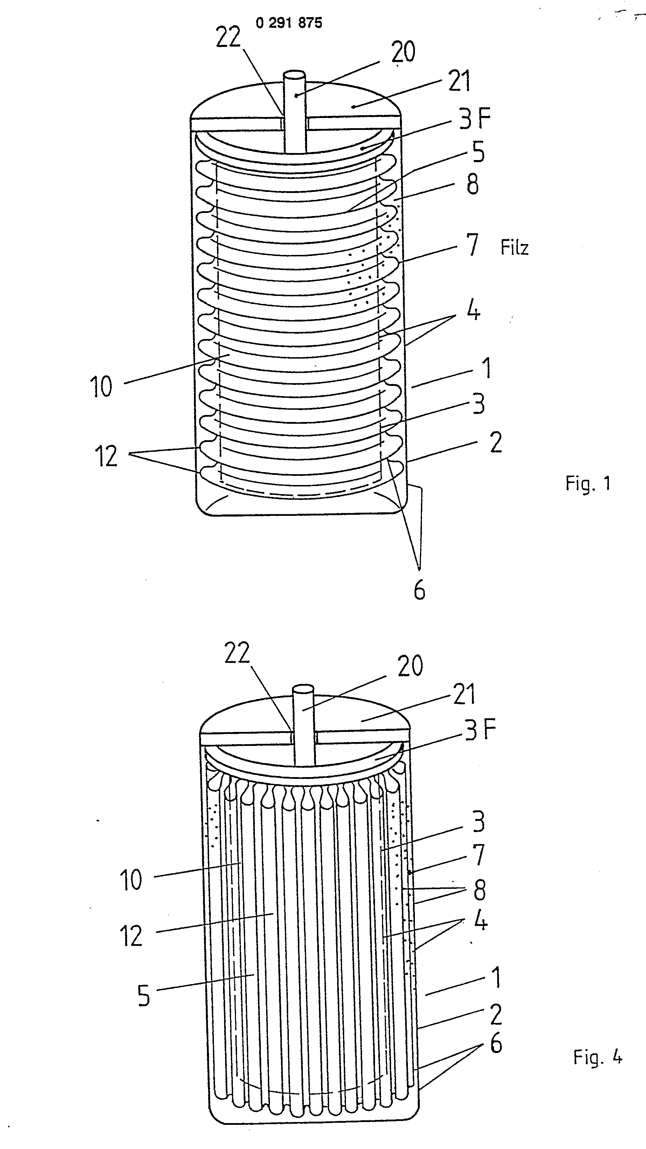

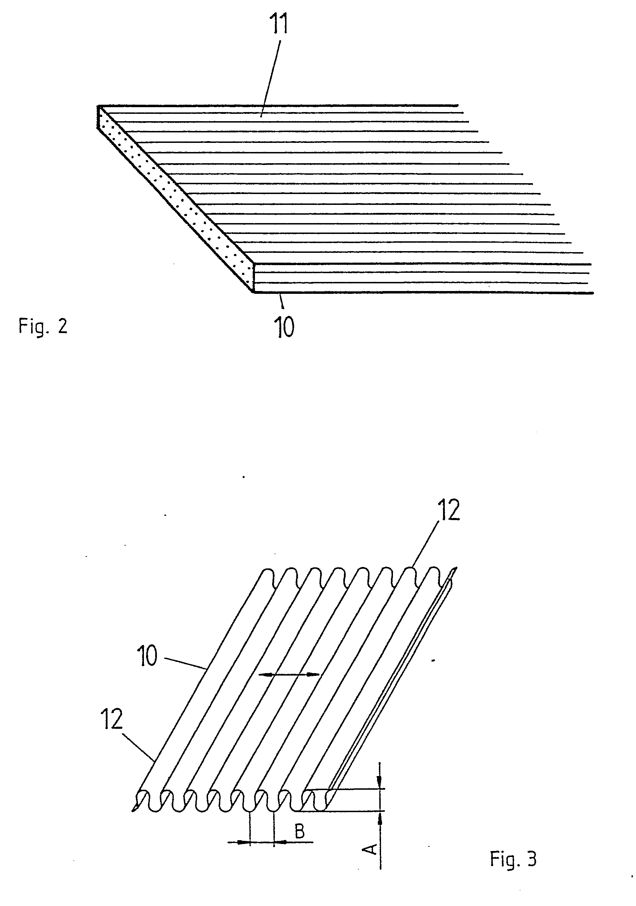

Fig.1 zeigt einen Ausschnitt aus einer elektrochemischen Speicherzelle 1, die im wesentlichen durch ein becherförmiges Gehäuse 2 und einen Festelektrolyten 3 gebildet wird. Der Festelektrolyt 3 ist ebenfalls becherförmig ausgebildet und innerhalb des Gehäuses 2 angeordnet. Die Abmessungen des Festelektrolyten 3 sind so gewählt, daß zwischen der Innenfläche des Gehäuses 2 und der Außenfläche des Festelektrolyten 3 ein zusammenhängender Zwischenraum 4 gebildet wird, der hier als Kathodenraum dient. Im Inneren des Festelektrolyten 3 ist der Anodenraum 5 installiert, der mit Natrium ausgefüllt ist. Im Kathodenraum 4 ist die Schwefelelektrode 6 angeordnet, die durch einen Filz 7 gebildet wird, der mit Schwefel 8 getränkt ist. Der Filz 7 wird durch Fasern aus Graphit gebildet. Der Graphit ist aus Pech hergestellt. Wie anhand von Fig.1 zu sehen ist, ist der Filz 7 in gefalteter Form in dem Kathodenraum 4 angeordnet. Zur Ausbildung dieses Filzes wird zunächst eine Matte 10 gefertigt, die in Fig.2 dargestellt ist. Für die Fertigung der Matte 10 werden die Fasern 11 aus Graphit oder Kohle so angeordnet, daß ihre Längsachsen im wesentlichen parallel zueinander verlaufen. Vorzugsweise weist die in den Kathodenraum einzusetzende Matte 10 eine Dicke von 4-6 mm auf. Die Breite und die Höhe der Matte 10 werden durch die Abmessungen des Kathodenraums 4 bestimmt. Die Länge und Breite der Matte 10 werden durch die Art bestimmt, wie die Matte im Kathodenraum angeordnet wird. Insbesondere ist dabei zu berücksichtigen welche Anordnung die Längsachsen der Falten 12 gegenüber der Längsachse des Kathodenraums aufweisen sollen. Nachdem die in Fig. 2 dargestellte Matte auf die gewünschte Länge und Breite zugeschnitten ist, wird sie gemäß der in Fig.3 dargestellten Form gefaltet. Erfindungsgemäß wird die Matte 10 derart gefaltet, daß die Längsachsen der Falten 12 senkrecht zur Längsachse der Matte verlaufen. Die Höhe H und die Breite B der Falten 12 wird durch ein definiertes Verhältnis festgelegt. Das Verhältnis von Breite zu Höhe sollte in den Grenzen zwischen 0,2:1 bis 2:1 liegen. Die bevorzugten Ausführungsformen des Filzes weisen ein Verhältnis von Breite zu Höhe auf, das zwischen 0,5:1 und 1:1 liegt. Bei der in Figur 1 dargestellten Speicherzelle 1 ist der Filz 7 so in den Kathodenraum 4 eingesetzt, daß die Längsachsen der Falten 12 ringförmig um die Längsachse der Speicherzelle 1 verlaufen. Die Länge der Matte 10 muß deshalb vor der Ausbildung der Falten 12 so gewählt werden, daß die Länge der gefalteten Matte 10 der Höhe des Kathodenraums 4 entspricht. Zur Ausbildung der Speicherzelle 1, insbesondere zur Ausbildung der Schwefelelektrode 6, kann die in Fig.2 dargestellte Matte 10 bei ihrem Einsetzen in den Kathodenraum 4 mit den gewünschten Falten 12 versehen werden. Eine andere Möglichkeit zum Einbringen eines gefalteten Filzes 7 in den Kathodenraum 4 besteht darin, daß außerhalb der Speicherzelle ein Rohr aus einem gefalteten Filz und Schwefel hergestellt ist. Die Abmessungen des Rohres werden so gewählt, daß dieses in den Zwischenraum 4 zwischen dem Gehäuse 2 und dem Festelektrolyten 3 eingesetzt werden kann. Das Werkzeug ist mit einem Ringspalt versehen, dessen Abmessungen in etwa denen des Kathodenraums 4 entsprechen.

Die Kohle- bzw. Graphitmatte wird in den Ringspalt des Werkzeuges so eingeschoben, daß sich falten gemäß Fig.1 ausbilden können. In das auf ca. 120-150 °C aufgeheizte Werkzeug wird dann flüssiger Schwefel gegeben. Anschließend wird das Ganze abgekühlt. Nach dem Erstarren des Schwefels wird das so hergestellte Rohr aus dem gefalteten Filz und dem Schwefel dem Werkzeug entnommen. Ebenso ist ein kontinuierlicher Vorgang, z.B. Extrudieren vorstellbar, wobei ein unendlich langes Rohr entsteht, wovon die benötigten Längen für die Speicherzelle 1 abgeschnitten werden.

Bei der in Fig. 1 dargestellten Speicherzelle 1 kann das metallische Gehäuse 2 aus Aluminium gefertigt und mit einer Korrosionsschutzschicht (hier nicht dargestellt) auf der Innenfläche überzogen werden. Als Korrosionsschutz muß ein Material verwendet werden, das eine gute elektrische Leitfähigkeit aufweist, weil das Gehäuse der Speicherzelle gleichzeitig als kathodischer Stromabnehmer dient. Der anodische Stromabnehmer wird durch einen Stab 20 gebildet, der weit in den Innenbereich des Festelektrolyten 3 hineinragt. Der Festelektrolyt ist am oberen Ende mit einem als Flansch dienenden Ring 3F aus Alphaaluminiumoxid verbunden. Dieser Ring 3F ist gleich zeitig mit der Innenfläche des Gehäuses 2 dauerhaft verbunden, wodurch der zwischen dem Festelektrolyten 3 und dem Gehäuse 2 liegende Kathodenraum 4 nach außenhin verschlossen ist. Der Anodenraum wird durch einen Deckel 21 nach außenhin verschlossen, der ebenfalls dichtschließend mit dem Gehäuse 2 verbunden ist. Der anodische Stromabnehmer 20 ist isoliert durch den Deckel 21 hindurchgeführt und steht nach außen einige Millimeter über. Die Isolierung ist mit 22 gekennzeichnet.

Fig.4 zeigt eine weitere Ausführungsform der erfindungsgemäßen Speicherzelle 1. Die Unterschiede zwischen der in Fig.1 und Fig.4 dargestellten Speicherzelle 1 bestehen lediglich in der Anordnung des Filzes 7. Gleiche Bauteile sind mit gleichen Bezugszeichen versehen. Der Kathodenraum 4 ist auch hierbei zwischen dem Gehäuse 2 und dem Festelektrolyten 3 angeordnet. Die Elektrode 6 wird wiederum durch einen Filz 7 gebildet, der mit Schwefel 8 getränkt ist. Wie Fig. 4 zeigt, ist der Filz 7, insbesondere die ihn bildende Matte 10 so innerhalb des Kathodenraums 4 angeordnet, daß die Längsachsen der Falten 12 parallel zur Längsachse der Speicherzelle 1 verlaufen. Der Filz 7 kann, wie bei der in Fig.1 dargestellten und in der Beschreibung erläuterten Speicherzelle 1, beim Einsetzen in den Kathodenraum 4 in der hier dargestellten Art und Weise gefaltet werden. Andererseits kann auch hierfür wieder ein Werkzeug (nicht dargestellt) verwendet werden, innerhalb dessen der Filz zunächst zu einem Rohr geformt und gefaltet wird, das anschließend in den Kathodenraum eingesetzt werden kann.

Erfindungsgemäß kann die Schwefelelektrode 6 auch aus mehreren Filzstücken 7 gebildet werden. Dabei ist darauf zu achten, daß die Länge dieser Filzstücke 7, (hier nicht dargestellt) ein definiertes Verhältnis mit der Breite ihrer Falten 12 bilden. Das Verhältnis zwischen der Länge der Filzstücke 7 und der Breite der Falten 12 sollte zwischen 5:1 und 20:1 liegen. Ein bevorzugtes Verhältnis ist 10:1. Die Menge des in den Kathodenraum 4 einzufüllenden Filzes sollte bei jeder Ausführungsform zwischen 5 und 30 mg/cm$^3$ betragen. Vorzugsweise sollte eine Filzmenge zwischen 10 und 20 mg/cm$^3$ in den Kathodenraum 4 eingesetzt werden.

## Ansprüche

1. Elektrochemische Speicherzelle (1) auf der Basis von Natrium und Schwefel mit einem Anodenraum (5) und einem Kathodenraum (4), die durch einen Festelektrolyten (3) voneinander getrennt und von einem metallischen Gehäuse (2) nach außenhin begrenzt sind, wobei im Kathodenraum (4) zur Bildung der Elektrode (6) ein mit Schwefel getränkter Filz (7) angeordnet ist, dessen Fasern (11) aus Graphit oder Kohle gefertigt sind, dadurch gekennzeichnet, daß der Filz (7) mindestens zweifach vorzugsweise mehrfach gefaltet ist, und seine Fasern (11) im wesentlichen senkrecht zur Längsachse der Speicherzelle (1) und senkrecht zur Oberfläche des Festelektrolyten (3) angeordnet sind.

2. Elektrochemische Speicherzelle nach Anspruch 1, dadurch gekennzeichnet, daß der Filz (7) aus einer zusammenhängenden Matte (10) gefertigt ist, innerhalb derer die Fasern (11) parallel zueinander angeordnet sind, und daß der Filz (7) so gefaltet ist, daß das Verhältnis der Breite (B) einer Falte (12) zu ihrer Höhe (H) 0,2:1 bis 2:1, vorzugsweise 0,5:1 bis 1:1 beträgt.

3. Elektrochemische Speicherzelle nach Anspruch 1, dadurch gekennzeichnet, daß die Elektrode (6) durch mehrere Filzstücke (7) gebildet ist, und daß das Verhältnis zwischen der Länge dieser Filzstücke (7) und der Breite (B) einer jeden Falte (12) dieser Filzstücke (7) zwischen 5:1 und 20:1, vorzugsweise 10:1 beträgt.

4. Elektrochemische Speicherzelle nach einem der Ansprüche 1 bis 3, dadurch gekennzeichnet, daß die Falten (12) des Filzes (7) so angeordnet sind, daß sie zur Längsachse der Matte (10) senkrecht verlaufen.

5. Elektrochemische Speicherzelle nach einem der Ansprüche 1 bis 4, dadurch gekennzeichnet, daß der Filz (7) so innerhalb des Kathodenraums (4) angeordnet ist, daß die Längsachsen der Falten (12) ringförmig um die Längsachse der Speicherzelle (1) verlaufen.

6. Elektrochemische Speicherzelle nach einem der Ansprüche 1 bis 4, dadurch gekennzeichnet, daß die Falten (12) des Filzes (7) so in dem Kathodenraum (4) angeordnet sind, daß die Längsachsen der Falten (12) parallel zur Längsachse der Speicherzelle (1) verlaufen.

7. Elektrochemische Speicherzelle nach einem der Ansprüche 1 bis 6, dadurch gekennzeichnet, daß die Menge des in den Kathodenraum (4) gefüllten Filzes (7) 5 bis 30 mg/cm$^3$, vorzugsweise zwischen 10 und 20 mg/cm$^3$, beträgt.

8. Elektrochemische Speicherzelle nach einem der Ansprüche 1 bis 7, dadurch gekennzeichnet, daß der in den Kathodenraum (4) eingesetzte Filz (7) als Verbundkörper mit Schwefel in Form eines Rohres eingesetzt ist.

0 291 875

Fig. 1

Fig. 4

0 291 875

Fig. 2

Fig. 3